(19) Europäisches Patentamt
European Patent Office
Office européen des brevets

(11) **EP 4 664 194 A2**

(12) **EUROPEAN PATENT APPLICATION**

(43) Date of publication:
**17.12.2025 Bulletin 2025/51**

(51) International Patent Classification (IPC):
$G02F\ 1/35^{(2006.01)}$          $G02F\ 1/365^{(2006.01)}$

(21) Application number: **25205203.0**

(22) Date of filing: **29.09.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(71) Applicant: **ASML Netherlands B.V.**
**5500 AH Veldhoven (NL)**

(72) Inventors:
• **BELLI, Federico**
  **5500 AH Veldhoven (NL)**
• **ALMEGHARI, Abdelrahman**
  **5500 AH Veldhoven (NL)**
• **CAMPI, Filippo**
  **5500 AH Veldhoven (NL)**
• **ABDOLVAND, Amir**
  **5500 AH Veldhoven (NL)**
• **SAJADI HEZAVEH, Mohsen**
  **5500 AH Veldhoven (NL)**
• **TAO, Yin**
  **5500 AH Veldhoven (NL)**

(74) Representative: **ASML Netherlands B.V.**
**Corporate Intellectual Property**
**P.O. Box 324**
**5500 AH Veldhoven (NL)**

(54) **A RADIATION SOURCE AND METHOD FOR GENERATING OUTPUT RADIATION**

(57)     A radiation source is described, which comprises a seed radiation generator for generating at least one seed radiation, wherein the seed radiation is substantially broadband; at least one optical parametric amplifier, each said at least one optical parametric amplifier comprising a hollow core fiber for confining a working fluid; and a radiation delivery arrangement being operable to deliver and couple said seed radiation and at least one pump radiation into said at least one optical parametric amplifier so as to generate output radiation.

**Fig. 10**

## Description

FIELD

The present invention relates to a selectable wavelength radiation source, and in particular such a radiation source in relation to metrology applications in the manufacture of integrated circuits.

BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as CD = $k_1 \times \lambda$/NA, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, broadband or white light radiation sources are increasingly used for such metrology applications. Among other techniques for white light generation, hollow-core optical waveguides may be used to convert narrowband input radiation to broadband output radiation via nonlinear optical processes. Various different types of hollow-core optical waveguides, such as for example hollow-core photonic crystal fiber (PCF), have been developed to suit the need of generating broadband radiation. It would be desirable to improve on present devices for broadband radiation generation.

In some metrology applications, it is desirable to select wavelengths or wavelength bands for certain measurements, rather than using the full broadband radiation generated in such nonlinear optical processes. In particular, it is desirable to provide a fast switching tunable radiation source having a spectrally tunable output which can be varied very fast (i.e., can switch between wavelengths quickly).

SUMMARY

According to a first aspect of the invention, there is provided a radiation source comprising: a seed radiation generator for generating at least one seed radiation, wherein the seed radiation is substantially broadband; at least one optical parametric amplifier, each said at least one optical parametric amplifier comprising a hollow core fiber for confining a working fluid; and a radiation delivery arrangement being operable to deliver and couple said seed radiation and at least one pump radiation into said at least one optical parametric amplifier so as to generate output radiation.

According to a second aspect of the invention, there is provided a method of generating output radiation comprising: generating substantially broadband seed radiation; generating at least one pump radiation; and coupling the seed radiation and the at least one pump radiation into a respective fluid filled hollow core fiber of at least one optical parametric amplifier so as to generate output radiation via a four-wave mixing optical parametric amplification process.

BRIEF DESCRIPTION OF THE DRAWINGS

Embodiments of the invention will now be described, by way of example only, with reference to the accompanying schematic drawings, in which:

- Figure 1 depicts a schematic overview of a lithographic apparatus;

- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 is a schematic cross sectional view of a hollow core optical fiber that may form part of a radiation source according to an embodiment in a transverse plane (i.e. perpendicular to an axis of the optical fiber);
- Figure 8 depicts a schematic representation of a radiation source according to an embodiment for providing broadband output radiation;
- Figures 9(a) and 9(b) schematically depict the transverse cross-sections of examples of hollow core photonic crystal fiber (HC-PCF) designs;
- Figure 10 is a schematic representation of an example switchable broadband radiation device according to concepts disclosed herein;
- Figure 11 depicts the principle of the method of color switching embodied in the switchable broadband radiation device of Figure 10;
- Figure 12(a) depicts the principle behind a method of 4 way mixing optical parameter amplification using a single pump radiation according to concepts disclosed herein, and Figure 12(b) depicts the principle behind a method of 4 way mixing optical parameter amplification using a dual pump radiation according to concepts disclosed herein;
- Figure 13 is a schematic representation of an example switchable broadband radiation device configured comprising a dual pump arrangement according to concepts disclosed herein.
- Figure 14 depicts a block diagram of a computer system for controlling a broadband radiation source.

## DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

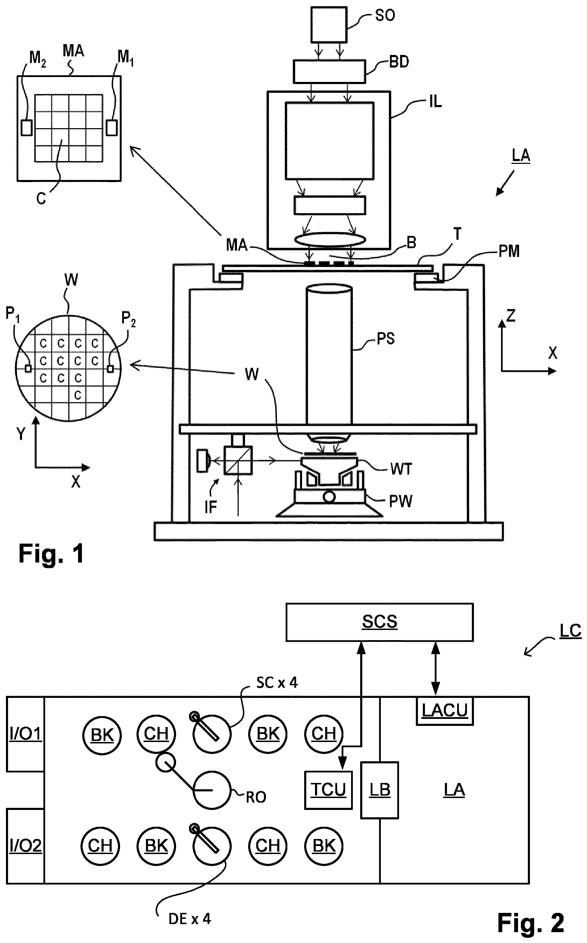

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks P1, P2. Although the substrate alignment marks P1, P2 as illustrated occupy dedicated target portions, they may be located in spaces between target portions. Substrate alignment marks P1, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

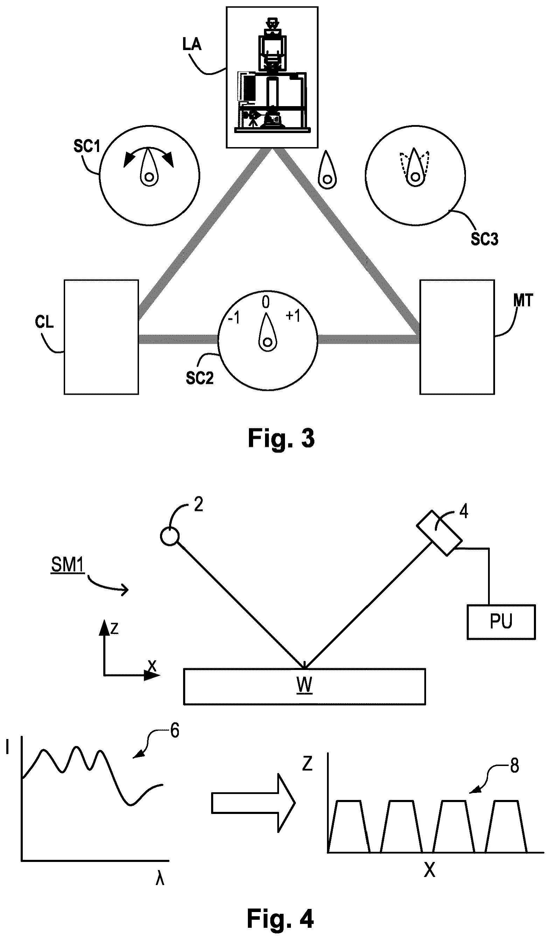

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

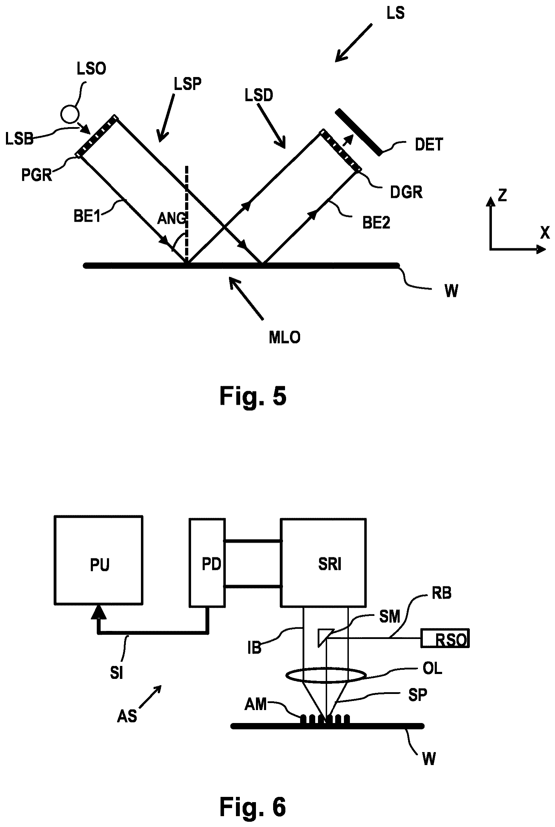

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and de-multiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. The ability to quickly switch between different wavelengths and spectral bands may be useful in metrology systems MT such as for example level sensors, alignment mark measurement systems, scatterometry tools, or inspection tools, such as any of the tools described above.

A known method for providing wavelength tunable radiation comprises generating broadband radiation (e.g., a supercontinuum), and then filtering this radiation to obtain the desired wavelength or band. To generate the broadband radiation, high-power narrow band or single frequency input radiation or pump radiation may be broadened, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localized high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its core assisting in confining radiation that travels through the waveguide. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

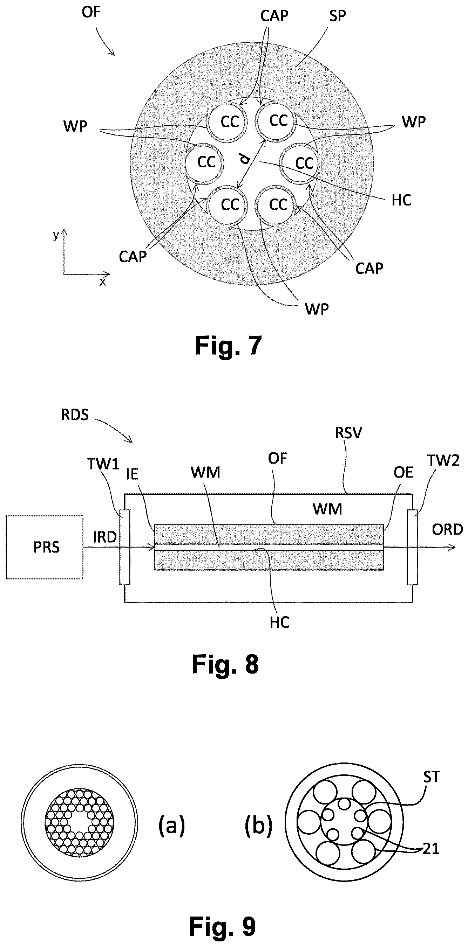

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as an active nonlinear medium for broadening input radiation. Such a fiber and gas arrangement may be used to create a supercontinuum radiation source. Radiation input to the fiber may be electromagnetic radiation, for example radiation in one or more of the infrared, visible, UV, and extreme UV spectra. The output radiation may consist of or comprise broadband radiation, which may be referred to herein as white light.

Some embodiments relate to a new design of such a broadband radiation source comprising a hollow core optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBF).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference. Figure 9(a) shows a Kagome fiber, comprising a Kagome lattice structure.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 centimeter (cm) and 10 meter (m), for example, the optical fiber OF may have a length between 10 cm and 100 cm.

The optical fiber OF comprises: a hollow core HC (e.g., for confining a working medium such as a working fluid); a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 μm.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 $\mu$m. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Figure 9(a) shows an embodiment of HC-PCFs with three rings of capillaries CAP stacking on top of each other along the radial direction. In this embodiment, each capillary CAP is in contact with other capillaries both in the same ring and in a different ring. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 9(b) shows a modified embodiment of the above discussed HC-PCFs with a single ring of tubular capillaries. In the example of Figure 9(b) there are two coaxial rings of tubular capillaries 21. For holding the inner and outer rings of tubular capillaries 21, a support tube ST may be included in the HC-PCF. The support tube may be made of silica.

The tubular capillaries of the examples of Figure 7 and Figures 9 (a) and (b) may have a circular cross-sectional shape. Other shapes are also possible for the tubular capillaries, like elliptical or polygonal cross-sections. Additionally, the solid material of the tubular capillaries of the examples of Figure 7 and Figures 9 (a) and (b) may comprise plastic material, like PMA, glass, like silica, or soft glass.

Figure 8 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a working fluid such as a gas) confined within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a working fluid such as a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM (e.g., for generating the broadband seed radiation and/or for optical parametric amplification) or working fluid may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture.

At least in terms of the seed generation and depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion.

In one implementation, the working medium WM may be confined within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localized radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may comprise a single frequency, or a narrow range of frequencies. The input radiation IRD may be generated by a laser. Similarly, the output radiation ORD may be collimated and/or may be coherent.

The input radiation IRD provided by the pulsed pump radiation source PRS may be pulsed. The input radiation IRD may comprise electromagnetic radiation of one or more frequencies between 200 nm and 2 $\mu$m. The input radiation IRD may for example comprise electromagnetic radiation with a wavelength of 1.03 $\mu$m. The repetition rate of the pulsed radiation IRD may be of an order of magnitude of 1 kHz to 100 MHz. The pulse energies may have an order of magnitude of 1 nJ to 100 µJ, for example 1 - 10 µJ. A pulse duration for the input radiation IRD may be between 10 fs and 10 ns, for example 400 fs. The average power of input radiation IRD may be between 1 mW to several 100 W. The average power of input radiation IRD may for example be 20 - 50 W.

The pulsed pump radiation source PRS may be a laser. The spatio-temporal transmission characteristics of such a laser pulse, e.g. its spectral amplitude and phase, transmitted along the optical fiber OF can be varied and tuned through adjustment of (pump) laser parameters, working component WM variations, and optical fiber OF parameters. Said spatio-temporal transmission characteristics may include one or more of: output power, output mode profile, output temporal profile, width of the output temporal profile (or output pulse width), output spectral profile, and bandwidth of the output spectral profile (or output spectral bandwidth). Said pulsed pump radiation source PRS parameters may include one or more of: pump wavelength, pump pulse energy, pump pulse width, pump pulse repetition rate. Said optical fiber OF parameters may include one or more of: optical fiber length, size and shape of the hollow core HC, size and shape of the capillaries, thickness of the walls of the capillaries surrounding the hollow core HC. Said working component WM, e.g. filling gas, parameters may include one or more of: gas type, gas pressure and gas temperature.

For sensors such as overlay, alignment and level sensors, it is desirable for the generated radiation to be quickly tunable over a broad spectral range. It is also desirable that the radiation comprise high power and low intensity fluctuations.

Presently, as has been described above, nonlinear interaction of short laser pulses from a drive laser with a gas comprised inside a HC-PCF is used to generate a broad spectrum covering the visible-NIR spectral range with almost 1000 nm bandwidth, i.e., a white light supercontinuum (SC). Typically, this supercontinuum output is spectrally filtered to achieve one or more narrow spectral bands (e.g., with bandwidth between 0.1nm and 100nm), depending on specific metrology requirements. The present method of supercontinuum generation suffers from low conversion efficiency from the pump laser to a desired spectral band and significant cost and manufacturing complexity due to the requirement of an additional filtering module.

To address one or more of these drawbacks, an alternative approach for generating light for metrology sensors is proposed herein. The proposed approach is to generate radiation using one or more optical parametric amplifiers (OPAs), each OPA comprising a hollow waveguide or hollow core fiber (e.g., a HC-PCF) comprising a fluid (e.g., a gas) confined within its hollow core (e.g., filled with the gas), which provides for a third order nonlinearity process and therefore four-wave mixing (4WM). An OPA uses a single-pass optical parametric amplifier process (in contrast to an optical parametric oscillator). In this process, at least one pump radiation (e.g., a single pump radiation having a single wavelength or a first pump radiation of a first wavelength and a second pump radiation of a second wavelength) and (e.g., low energy) seed radiation is generated and coupled into the hollow core fiber. Due to the third order nonlinear interaction within the gas filled hollow core fiber, the seed radiation is amplified to generate signal radiation which in turn results in the generation and amplification of idler radiation. As a result of this process, three pulses (or four, including a second idler, in the dual pumping example described below) are output from the fiber: the pump residual, the signal radiation and the idler radiation. To generate a broadband seed, the arrangement comprises a broadband seed generator. The broadband seed may be generated from the same laser source as the pump radiation, or otherwise.

In an example, the seed may comprise a chirped seed, having a frequency varied over time. In this way, the actual wavelength(s) amplified can be selected by selectively defining a temporal overlap of the pump radiation and chirped seed radiation within the hollow core fiber, such that the seed radiation amplified (to generate the signal radiation) corresponds to the seed wavelength(s) at the overlap. This may be achieved by providing at least one delay module which enables a selective setting/varying of the delay between the chirped seed radiation and the pump radiation prior to admittance into the hollow core fiber. As an alternative, a desired output (signal) wavelength or wavelength band may be selected using a spectral filter to filter the (chirp-free) seed radiation, with the timing between pump and filtered seed controlled by any suitable means to ensure that they temporally overlap.

Typical optical parametric amplifiers use crystals rather than hollow core fibers, and therefore rely on second-order non-linearity and three-wave-mixing. These OPAs typically have slow tuning timescales (on the order of hundreds of milliseconds) and poor beam quality (due to several frequency conversion stages). They also can amplify only wavelengths that are longer than the pump; They also require complex noncollinear configuration to achieve broadband gain and have limited gain bandwidth in the near ultraviolet as a result of material bulk dispersion.

4WM and the emission outputs (idler and signal) in an OPA depends on the external broadband (e.g., supercontinuum) seed parameters, the pump parameters, the relative delays among seed and pump, and by the 4WM process in the hollow waveguide (which is further dependent on the gas parameters such as gas species, gas pressure etc.). The amplification may be defined relative to the broadband seed (e.g., from 1nW/nm to 10 mW/nm for a gain of 70 dB).

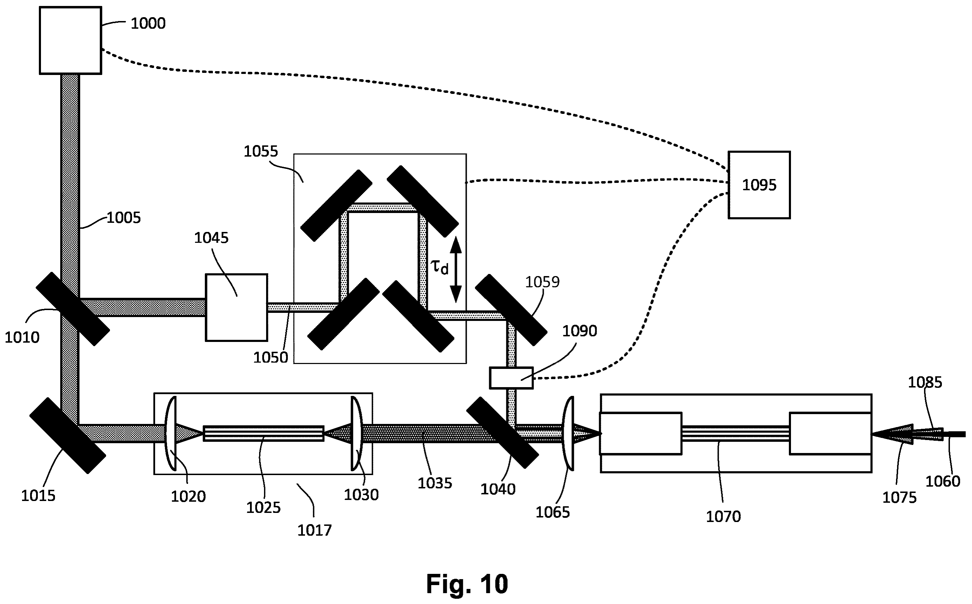

Figure 10 is a schematic illustration of an OPA source suitable for metrology applications in accordance with methods disclosed herein. A radiation source, e.g., a laser source 1000 generates laser radiation 1005. A portion of the laser radiation 1005 is split by beam splitter 1010 and may be directed by beam directing element 1015 along a seed generation path. A seed radiation generator 1017 may generate broadband (e.g., supercontinuum) seed radiation 1035. In this specific example, a lens (or lens arrangement) 1020 couples the laser radiation into a non-linear optical element 1025 such as a fiber waveguide (e.g., photonic crystal fiber) or filamentation medium (e.g., a filamentation crystal). In this example, the seed radiation generator 1017 produces chirped broadband seed radiation 1035 via output lens arrangement 1030.

The non-linear optical element 1025 may comprise a photonic crystal fiber such as a solid core photonic crystal fiber. Optionally, the solid core photonic crystal fiber may have a core comprising a rare earth dopant. Alternatively, the non-linear optical element 1025 may comprise a hollow core photonic crystal fiber, the hollow core comprising a working medium (e.g., a working fluid such as a pressurized working fluid). For example, the working fluid lay comprise a gas (e.g., a pressurized gas). For example, the hollow core photonic crystal fiber may be of a type described above in relation to Figures 7, 8 and 9(a)/(b) and the working fluid may be any of the gasses described in this section (e.g., a noble gas or a molecular gas). By way of another alternative, non-linear optical element 1025 may comprise a filamentation medium such as a filamentation crystal (e.g., sapphire or YAG crystal).

Other alternative seed radiation generator 1017 technologies for generating broadband seed radiation 1035 may include, *inter alia,* an incandescent light bulb or a laser pumped plasma Source.

"Broadband", in the context of the broadband seed radiation 1035 may comprise having wavelengths spanning a range greater than 40nm, greater than 50nm, greater than greater than 70nm, greater than 100nm, greater than 150nm or greater than 200nm, for example. The broadband radiation may comprise a supercontinuum (e.g., comprising energy at all wavelengths spanning a range of interest) or otherwise (e.g., where there may be gaps between some wavelengths of the range of interest, such as a comb profile).

In a specific example arrangement, the broadband seed radiation 1035 may be generated using an all-normal dispersion solid core photonic crystal silica fiber 1025 (e.g., on the order of meters long, such a 2m fiber) pumped with up to 6 nJ pulses 1005 with a wavelength centered at e.g., 1030 nm, as generated by source 1000. The chirp may result in an approximately linear relationship between wavelength and time, although the switching concept described herein will work with any wavelength-time relationship and therefore the spectrogram may be non-linear. The seed radiation may be low energy, e.g., less than 100pJ.

As such, the example seed radiation generator 1017 provides a low-energy pulse which can be scaled simply at a reasonable cost, and which produces a linear time-to-wavelength mapping. However, different non-linear processes and schemes can be used to drive seed generation, e.g., to increase bandwidth coverage. For example, a single pass free space configuration with nonlinear material or a multipass or fiber-based scheme can generate the seed spectral bandwidths.

In this specific example, the pump radiation 1050 comprises the second harmonic (or other higher harmonic) of the laser radiation 1005. e.g., as generated using a suitable harmonic generator such as at least one suitable harmonic generation element or crystal 1045; e.g., at least one BBO (beta barium borate) crystal or at least one LBO (Lithium triborate) crystal. However, this is purely optional, and the fundamental pump radiation may be used, depending on the pump laser characteristics and the desired output characteristics.

Wavelength tuning may be implemented using a delay stage 1055 configured to delay one of the pump radiation and seed radiation with respect to the other of the pump radiation and seed radiation. In the example, the delay stage 1055 is comprised in the pump path, although it may instead be comprised in the seed path, or delay stages may be provided in both pump and seed paths.

The delayed pump radiation may be directed by beam directing element 1059 and beam combiner 1040, which combines the pump radiation 1050 and seed radiation 1035. The pump radiation 1050 and seed radiation 1035 may be coupled into the anti-resonant (gas filled) hollow core fiber 1070 using e.g., a radiation coupler 1065 such as a lens. By coupling the pump radiation 1050 with the (e.g., very low energy) seed radiation 1035 into the hollow core fiber 1070, the seed is amplified into a signal radiation 1075 comprising a wavelength $\lambda_{Signal} > \lambda_{pump}$, where $\lambda_{pump}$ is the wavelength of the pump radiation 1050. This in turn results in the generation and amplification of idler radiation 1060 having a wavelength $\lambda_{Idler} < \lambda_{pump}$. The output may also comprise some residual pump radiation 1085.

The wavelengths $\lambda_{Signal}$, $\lambda_{Idler}$ of signal and idler radiation can be tuned using the delay stage 1055 to impose a delay $\tau_d$ which determines the overlap in time between the pump and seed, and therefore which of the seed wavelengths are amplified into the signal and idler radiation. The bandwidth of the signal and idler radiation can be tuned via controlling the energy of the seed radiation, the bandwidth of the pump, and/or the energy of the pump. The temporal delay $\tau_d$ controls which "spectral seed bin" (e.g., a portion or bin of the seed radiation spectrogram) is amplified in the hollow core fiber due to it overlapping in time with the pump pulse e.g., the correct spectral portion of the pump pulse. The time-wavelength mapping may also include a chirp of the pump, such that the effective overlap is between the seed and pump spectral bins. The delay range is about a few ps in this configuration but could be reduced to improve tuning speed and use of higher bandwidth delay stages.

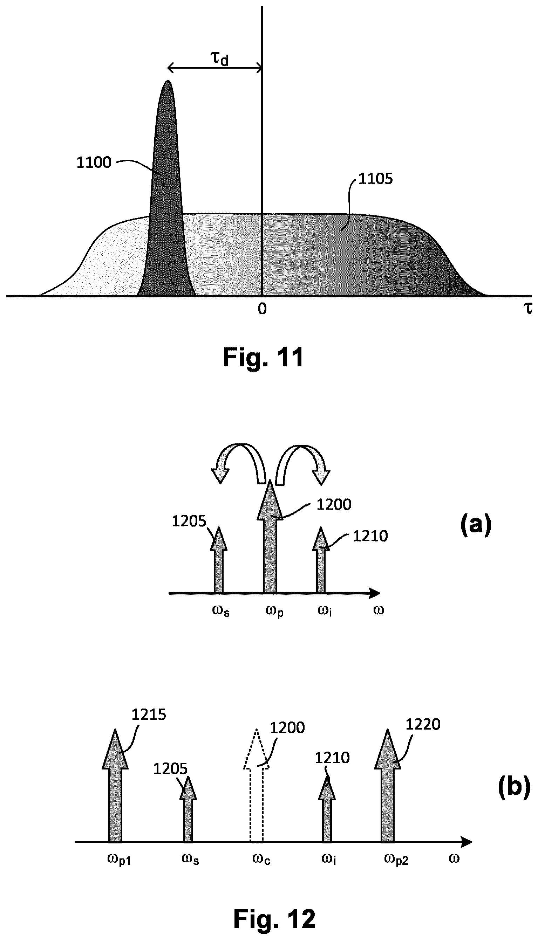

Figure 11 illustrates the wavelength selection/-

tuning principle of the OPA of Figure 10. Shown is a pump pulse 1100 and chirped seed pulse 1105, where the grayscale shading represents variation in wavelength; i.e., the wavelength of the chirped seed radiation 1105 varies with the delay $\tau$. The imposed relative delay $\tau_{\mathrm{d}}$ between the pump pulse 1100 with respect to the seed pulse 1105 (the latter nominally centered on zero delay) is varied using the delay line 1055 (Figure 10). This effectively moves the pump pulse along the delay $\tau$ axis such that it overlaps different portions of the seed pulse, and therefore different spectral components thereof, in dependence with the delay line setting $\tau_{\mathrm{d}}$. The wavelengths of the output signal radiation will correspond to the wavelengths of the seed spectrum which is overlapped by the pump pulse. In addition, idler radiation will also be amplified at a different wavelength range which also depends on this overlap region. By way of a specific illustrative example, the seed spectrum may extend over a wavelength range of 850 nm to 1280 nm; in this example the signal wavelengths may be selectable over some or all of this range and the corresponding idler wavelengths will be selectable over the ultraviolet range. This means output radiation can be selected within one or both of these ranges. More generally, the seed radiation may extend over a range of wavelengths having a bandwidth greater than 100nm, greater than 200nm, greater than 300nm or greater than 400nm, for example.

It can also be appreciated that the signal radiation and idler radiation can be used individually or simultaneously, e.g., to perform simultaneous measurement at two different wavelengths.

At a fixed pump energy below the saturation threshold of maximum gain, the system may achieve a variable spectral gain ranging in the tens of decibels across each of the seed bandwidth and the idler bandwidth. Increasing the pump energy beyond this point leads to a spectral gain saturation and broadening of both the idler and seed spectra at the saturation point, resulting in a lower spectral gain.

It may be desirable to flatten and/or achieve a relatively flat gain profile across the seed and/or idler bandwidths; i.e., such that the gain does not vary much between different output wavelengths. To achieve this, for example, the proposed OPA may provide for an adjustable pump energy. Referring again to Figure 10, an optional power control unit (PCU) 1090 may be provided in the pump radiation path to control the power of the pump radiation 1050. By tuning the energy of the pump radiation (e.g., in dependence of the imposed delay and therefore output wavelengths), it is possible to flatten the amplification spectral response.

The PCU 1090 may comprise a polarization rotation element (e.g., a Pockels cell or an acousto-optic modulator AOM) which selectively rotates the polarization of the pump radiation beam, and a polarizing beam splitter which passes a portion of the pump radiation in dependence of the imposed polarization. Such a PCU can provide sub-millisecond power tunability.

The Gain may be defined as:

$$G(\tau_{\mathrm{d}}, E_p) = 10 \log \left[ \frac{P_s(L)}{P_s(0)} \right]$$

where $\tau_{\mathrm{d}}$ is the delay, $E_p$ is the pump pulse energy, $P_s$ is the power spectral density and $L$ is the fiber length. The pulse energies may be estimated by integrating the spectral power density per pulse. Therefore, for variable delay $\tau_{\mathrm{d}}$, and therefore for a variable pair of output wavelength bands (signal and idler), the pump pulse energy can be controlled to provide a substantially constant gain (or at least a flatter gain response). A controller may be configured to achieve this in response to selection of the output spectral characteristics (i.e., on dependence of the set delay).

A controller 1095 may be provided to control any controllable element of the radiation source and/or laser source, e.g., to control the source such that it operates as a 4WM OPA and enable control of the output radiation characteristics (e.g., *inter alia* spectral characteristics). As an example, the controller 1095 is shown here as controlling the laser source 1000, delay stage 1055 and PCU 1090, however this is only an example and the controller may control only a subset of these, or additional elements (e.g., beam directing and/or focusing of any of the beams), or any alternative elements (e.g., a spectral filter instead of the delay line).

It can be appreciated that the output characteristics (e.g., gain, power and wavelength) of the OPA is dependent on the gas properties (e.g., gas type and pressure) within the hollow core, the fiber dimensions, the seed properties, the delay and the pump energy. Of these, the latter two parameters are the control parameters which can be varied sufficiently fast to achieve the desired switching speeds between wavelengths (e.g., in the microseconds range).

Example parameters may comprise a fiber having a length between 3cm and 1m, between 10cm and 70cm, or between 20cm and 60cm. The fiber may have a diameter of between 5$\mu$m and 100$\mu$m.

The working fluid confined within the hollow core may comprise any noble gas (or mixture thereof), for example argon. Other gasses may also be used, e.g., hydrogen or other molecular gas. However, parasite effects such as Raman gain saturation and instabilities or Raman sideband generations may reduce the efficiency and stability of the parametric amplifier; the use of a noble gas avoids such molecular instabilities and heating effects.

The working fluid (e.g., a gas under pressure) and the hollow core fiber may be sealed within a gas cell, such that the core of the hollow core fiber is in communication with (and therefore confined within) the working fluid sealed in the gas cell.

The gas may be pressurized to a pressure of between 2 and 10 bars, between 3 and 10 bars, between 3 and 8 bars or between 4 and 8 bars. The pump energy may be controlled to be less than 10μJ, less than 8μJ, less than 6μJ, less than 5μJ, less than 4μJ or less than 3μJ (i.e., on the order of magnitude of 1μJ). The seed energy may be less than 100pJ or less than 50pJ e.g., on the order of tens of pJ or less (e.g., on a pJ or fJ scale).

The proposed methods may provide a range of selectable wavelengths from ultraviolet to infrared, assuming both signal and idler output radiation is used. However, further refinements are proposed to extend the output spectral range for a substantially constant gas pressure.

In one approach, two or more parallel hollow core fiber based OPAs may be provided in parallel, each using a respective different hollow core fiber optimized for different wavelength ranges (e.g., comprising a different length and/or core diameter) and/or being pumped with pump radiation with different characteristics; e.g., different pump wavelengths, pulse energies and/or pulse durations and/or being seeded with seed radiation of different characteristics (e.g., coving a different wavelength range).

A different approach to extending output spectral range may comprise dual pumping of the hollow fiber, i.e., providing two pump radiation pulses at different wavelengths to simultaneously pump the seed radiation. This configuration reduces the overall pump energy requirements while maintaining a high and spectrally flat gain profile.

Figure 12 illustrates the principle. For comparison, Figure 12(a) illustrates the single pump example such as would occur in the (degenerate) 4WM OPA arrangement of Figure 10. A pump radiation 1200 of frequency $\omega_p$ is converted into signal radiation 1205 of frequency $\omega_s$ and generates idler radiation 1210 of frequency $\omega_i$. For each photon added to the signal wave, two photons are taken away from the pump wave, and one is put into an idler wave with a frequency on the other side of the pump: i.e.,:

$$\omega_p + \omega_p = \omega_s + \omega_i$$

Figure 12(b) illustrates the equivalent two-pump example, where a first pump radiation of frequency $\omega_{p1}$ and second pump radiation of frequency $\omega_{p2}$ is used. It can be shown that the OPA response in 4WM process can be flattened for the frequencies between the two the pump beams by using two pump lasers at different frequencies, provided that $\omega_c = (\omega_{p1} + \omega_{p2})/2$ is at or close to the zero dispersion wavelength of the fiber.

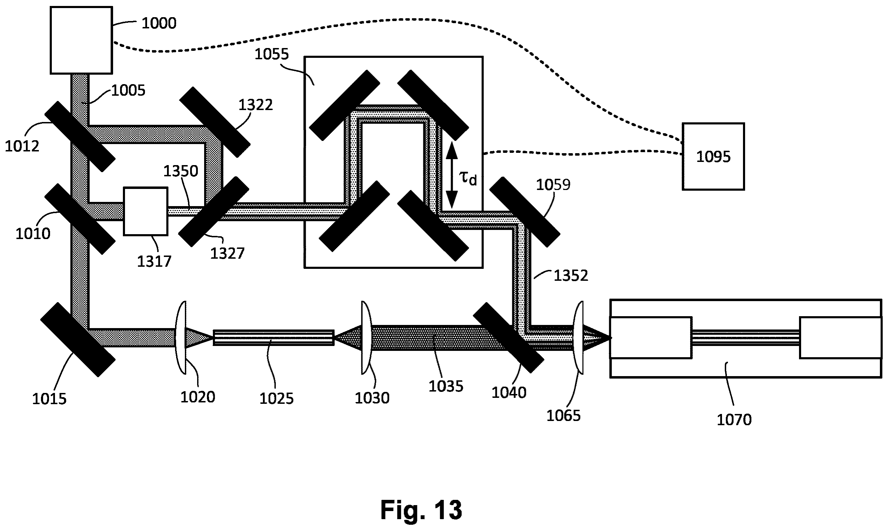

Figure 13 is a schematic illustration of an OPA source which utilizes a multiple (e.g., two) pump architecture. Elements already described in relation to Figure 10 will not necessarily be described again. In this example, an additional beam splitter 1012 is provided, such that beam splitters 1010, 1012 together define first pump path, second pump path and seed path. The seed path is the same as illustrated in Figure 10. In one of the pump paths, a suitable harmonic generator 1317 is provided, such as at least one suitable harmonic generation crystal; e.g., at least one BBO (beta barium borate) crystal or at least one LBO (Lithium triborate) crystal. In the specific example shown, first pump radiation comprising the fundamental laser radiation 1005 (directed by beam steering element 1322) propagates along the first pump path and second pump radiation comprising higher harmonic laser radiation 1350 (e.g., second or third harmonic radiation) is generated and propagates along the second pump path until they are recombined by beam combiner 1327. These two pump radiations 1352 then propagate together through the delay stage 1055 to the gas filled hollow core fiber 1070 to together pump a portion of the seed radiation 1035 therein.

As before, the spectral portion of the (chirped, broadband) seed radiation which is pumped depends on the delay imposed by the delay stage and therefore the spectral portion of the seed radiation temporally overlapped by the two pump pulses (which are simultaneous, i.e., the pump pulses temporally overlap). Though not shown, there may be provided a delay line (or other timing element) in one or both of the first pump path and second pump path prior to combination to provide and control temporal overlap of the pump pulses.

The specific arrangement may differ from shown. Two separate pump sources may be used, rather than obtaining the two pumps from the single source 1000. Either or each of the pump paths may include a harmonic generator, e.g., in the latter case such that one pump comprises the second harmonic and the other pump comprises the third harmonic of the source.

As with the Figure 10 example, PCUs such as have been described may be provided in each pump radiation path, e.g., prior to the beam combiner 1327, to enable individual control of each pump radiation.

Another method for extending the selectable wavelength range may comprise providing for two or more seed radiation generators able to generate seed radiation covering different chirped spectral bands, and an arrangement which enable selective switching between these seed radiation generators.

The broadband amplification technique described herein is not limited to the specific implementation described. It can be adapted to various hollow-core fibers (core sizes, designs, and lengths), different pump wavelengths, and a range of peak powers, offering a scalable and broadly tunable source.

The specific arrangements illustrated in Figures 10 and 13, e.g., the specific beam directing arrangements, beam splitting arrangements, beam combining arrangements, optical paths etc. may of course differ from the schematic examples illustrated. As such, the specific examples of radiation delivery arrangements embodied by sone or all of beam directing and/or splitting elements 1010, 1012, 1015, 1040, 1059, 1322, 1327 and delay line 1055 are only illustrative examples of a suitable radiation delivery arrangement being operable to deliver and couple the seed radiation and the at least one pump radiation into the at least one optical parametric amplifier. Any suitable arrangement of beam directing and/or splitting elements may be used. The individual elements may comprise, where appropriate, *inter alia* prisms, mirrors, mirror and/or prism beamsplitters.

For example, as an alternative to imposing a delay $\tau_d$ between pump and seed radiation, the wavelength of signal and idler can be tuned via color selection in the broadband seed via filtering, e.g., using a fast filtering module such as an acousto-optic tunable filter AOTF. Because the seed radiation is at low power, a relatively low cost acoustic device, grating light valve (GLV) or even fiber-based modulator could be used for the filtering even at high-repetition rates (e.g., of an order of magnitude of MHz), as any of these would be able to effectively handle the seed spectral bandwidth, average and peak power.

Method and apparatuses disclosed herein enable output radiation to be generated with a selectable spectral characteristics (e.g., a selectable central wavelength) over a spectral range greater than 200nm, greater than 300nm, greater than 400nm, greater than 450nm or greater than 500nm. In a specific example, the central wavelength may be selectable within the range 400nm to 900nm.

Optionally, the proposed source and methods selectively (e.g., by delay or spectral filtering) enable simultaneous amplification of all wavelengths within a wavelength band wider than 5nm, wider than 8nm or wider than 10 nm, over the broad selectable range described above. Alternatively, the selected bands may be narrow, depending on the application. The widths of the selected bands may be configurable, e.g., by suitable configuration of the pump radiation (e.g., pump pulse duration).

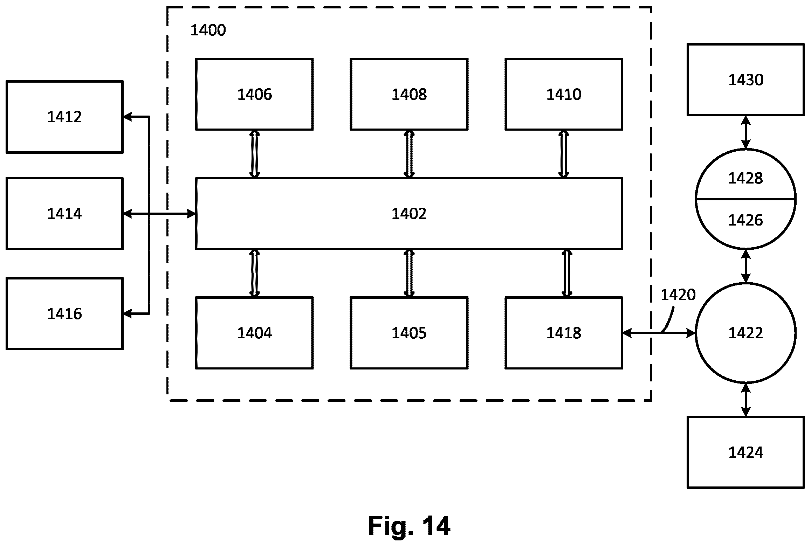

Figure 14 is a block diagram that illustrates a computer system 1400 that may assist in implementing the methods and flows disclosed herein. The controller 1095 of Figure 10 or 13 may comprise such a computer system 1400 (or elements thereof), for example. Computer system 1400 includes a bus 1402 or other communication mechanism for communicating information, and a processor 1404 (or multiple processors 1404 and 1405) coupled with bus 1402 for processing information. Computer system 1400 also includes a main memory 1406, such as a random access memory (RAM) or other dynamic storage device, coupled to bus 1402 for storing information and instructions to be executed by processor 1404. Main memory 1406 also may be used for storing temporary variables or other intermediate information during execution of instructions to be executed by processor 1404. Computer system 1400 further includes a read only memory (ROM) 1408 or other static storage device coupled to bus 1402 for storing static information and instructions for processor 1404. A storage device 1410, such as a magnetic disk or optical disk, is provided and coupled to bus 1402 for storing information and instructions.

Computer system 1400 may be coupled via bus 1402 to a display 1412, such as a cathode ray tube (CRT) or flat panel or touch panel display for displaying information to a computer user. An input device 1414, including alphanumeric and other keys, is coupled to bus 1402 for communicating information and command selections to processor 1404. Another type of user input device is cursor control 1416, such as a mouse, a trackball, or cursor direction keys for communicating direction information and command selections to processor 1404 and for controlling cursor movement on display 1412. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1400 in response to processor 1404 executing one or more sequences of one or more instructions contained in main memory 1406. Such instructions may be read into main memory 1406 from another computer-readable medium, such as storage device 1410. Execution of the sequences of instructions contained in main memory 1406 causes processor 1404 to perform the process steps described herein. One or more processors in a multi-processing arrangement may also be employed to execute the sequences of instructions contained in main memory 1406. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1404 for execution. Such a medium may take many forms, including but not limited to, non-volatile media, volatile media, and transmission media. Non-volatile media include, for example, optical or magnetic disks, such as storage device 1410. Volatile media include dynamic memory, such as main memory 1406. Transmission media include coaxial cables, copper wire and fiber optics, including the wires that comprise bus 1402. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1404 for execution. For example, the instructions may initially be borne on a magnetic disk of a remote computer. The remote computer can load the instructions into its dynamic memory and send the instructions over a telephone line using a modem. A modem local to computer system 1400 can receive the data on the telephone line and use an infrared transmitter to convert the data to an infrared signal. An infrared detector coupled to bus 1402 can receive the data carried in the infrared signal and place the data on bus 1402. Bus 1402 carries the data to main memory 1406, from which processor 1404 retrieves and executes the instructions. The instructions received by main memory 1406 may optionally be stored on storage device 1410 either before or after execution by processor 1404.

Computer system 1400 also preferably includes a communication interface 1418 coupled to bus 1402. Communication interface 1418 provides a two-way data communication coupling to a network link 1420 that is connected to a local network 1422. For example, communication interface 1418 may be an integrated services digital network (ISDN) card or a modem to provide a data communication connection to a corresponding type of telephone line. As another example, communication interface 1418 may be a local area network (LAN) card to provide a data communication connection to a compatible LAN. Wireless links may also be implemented. In any such implementation, communication interface 1418 sends and receives electrical, electromagnetic or optical signals that carry digital data streams representing various types of information.

Network link 1420 typically provides data communication through one or more networks to other data devices. For example, network link 1420 may provide a connection through local network 1422 to a host computer 1424 or to data equipment operated by an Internet Service Provider (ISP) 1426. ISP 1426 in turn provides data communication services through the worldwide packet data communication network, now commonly referred to as the "Internet" 1428. Local network 1422 and Internet 1428 both use electrical, electromagnetic or optical signals that carry digital data streams. The signals through the various networks and the signals on network link 1420 and through communication interface 1418, which carry the digital data to and from computer system 1400, are exemplary forms of carrier waves transporting the information.

Computer system 1400 may send messages and receive data, including program code, through the network(s), network link 1420, and communication interface 1418. In the Internet example, a server 1430 might transmit a requested code for an application program through Internet 1428, ISP 1426, local network 1422 and communication interface 1418. One such downloaded application may provide for one or more of the techniques described herein, for example. The received code may be executed by processor 1404 as it is received, and/or stored in storage device 1410, or other non-volatile storage for later execution. In this manner, computer system 1400 may obtain application code in the form of a carrier wave.

Further embodiments are disclosed in the subsequent list of numbered clauses:

1. A radiation source comprising:

a seed radiation generator for generating at least one seed radiation, wherein the seed radiation is substantially broadband;
at least one optical parametric amplifier, each said at least one optical parametric amplifier comprising a hollow core fiber for confining a working fluid; and
a radiation delivery arrangement being operable to deliver and couple said seed radiation and at least one pump radiation into said at least one optical parametric amplifier so as to generate output radiation.

2. A radiation source as defined in clause 1, wherein each said at least one optical parametric amplifier is configured to operate in a four-wave mixing optical parametric amplification process.

3. A radiation source as defined in any clause 2, comprising a controller for at least controlling the radiation source such that it operates in the four-wave mixing optical parametric amplification process.

4. A radiation source as defined in clause 1, 2 or 3, wherein said seed radiation generator is configured to chirp the seed radiation over a time period multiple times greater than a pulse duration of each at least one pump radiation such that a spectral composition of the output radiation is dependent on a temporal overlap of the pump radiation and seed radiation within each hollow core fiber.

5. A radiation source as defined in clause 4, comprising a delay arrangement operable to selectively impose a relative delay between the seed radiation and each at least one pump radiation, which varies the temporal overlap of the pump radiation and seed radiation.

6. A radiation source as defined in clause 5, wherein the delay arrangement comprises at least one delay line being operable to selectively delay the seed radiation and/or each at least one pump radiation.

7. A radiation source as defined in clause 1, 2 or 3, comprising a spectral filter being operable to selectively spectrally filter the seed radiation.

8. A radiation source as defined in any preceding clause, comprising at least one power control unit, wherein each at least one power control unit is operable to selectively control power of a respective pump radiation.

9. A radiation source as defined in clause 8, wherein the power control unit is operable to flatten and/or provide a substantially flat spectral gain response of the output radiation.

10. A radiation source as defined in clause 8 or 9, wherein each at least one power control unit is operable to control the power of its respective pump radiation based on a desired output spectrum and/or an imposed relative delay between the seed radiation and each at least one pump radiation.

11. A radiation source as defined in any preceding clause, wherein the seed radiation generator is operable such that said seed radiation comprises wavelengths which extend over a bandwidth greater than 200nm.

12. A radiation source as defined in any preceding clause, wherein said seed radiation generator comprises a fiber waveguide or filamentation medium.

13. A radiation source as defined in any preceding clause, wherein said working fluid is a gas, and each hollow core fiber comprises said gas confined within the hollow core fiber.

14. A radiation source as defined in 13, wherein the working fluid comprises a noble gas.

15. A radiation source as defined in any preceding clause, comprising two or more optical parametric amplifiers, wherein each said optical parametric amplifier is configured to provide respective output radiation comprising different spectral components.

16. A radiation source as defined in clause 15, wherein the optical parametric amplifiers differ from each other in terms of one or more of:

    one or more hollow core fiber dimensions;
    one or more properties of a respective pump radiation received at each optical parametric amplifier;
    one or more properties of a respective seed radiation received at each optical parametric amplifier; and/or
    one or more properties of a fluid supplied to each said optical parametric amplifier.

17. A radiation source as defined in any preceding clause, wherein the radiation delivery arrangement is operable to deliver and couple at least two simultaneous pump radiations, each pump radiation comprising at least a different wavelength.

18. A radiation source as defined in clause 17, wherein the radiation delivery arrangement comprises at least one harmonic generator operable to operate on at least one portion of the laser radiation to provide the at least two pump radiations with respective different wavelengths.

19. A radiation source as defined in any preceding clause, comprising a laser source being operable to generate laser radiation, at least a portion of which to be used as the at least one pump radiation.

20. A radiation source as defined in clause 19, wherein radiation delivery arrangement is operable to deliver at least a portion of the laser radiation to the seed radiation generator to provide the seed radiation.

21. A radiation source as defined in any preceding clause, comprising one or more harmonic generators being operable to generate a higher harmonic of the laser radiation to be used as at least one of the at least one pump radiation.

22. A radiation source as defined in any preceding clause, wherein the seed radiation generator is operable to generate the seed radiation to comprise an energy less than 100pJ.

23. A radiation source as defined in any preceding clause, wherein a central wavelength of the output radiation is selectable over a range of wavelengths greater than 200nm.

24. A radiation source as defined in any preceding clause, wherein a central wavelength of the output radiation is selectable over a range of wavelengths greater than 400nm.

25. A radiation source as defined in any preceding clause, wherein a spectral bandwidth of the output radiation is greater than 5nm.

26. A radiation source as defined in any preceding clause, wherein a spectral bandwidth of the output radiation is greater than 10nm.

27. A radiation source as defined in any preceding clause, wherein the output radiation comprises signal radiation and idler radiation, each extending over a respective different wavelength range.

28. A method of generating output radiation comprising:

    generating substantially broadband seed radiation;
    generating at least one pump radiation; and
    coupling the seed radiation and the at least one pump radiation into a respective fluid filled hollow core fiber of at least one optical parametric amplifier so as to generate output radiation via a four-wave mixing optical parametric amplification process.

29. A method as defined in clause 28, comprising chirping the seed radiation over a time period multiple times greater than a pulse duration of each at least one pump radiation; and controlling a temporal overlap of the pump radiation and seed radiation within each hollow core fiber to define a spectral composition of the output radiation.

30. A method as defined in clause 29, comprising selectively imposing a relative delay between the seed radiation and each at least one pump radiation, which varies the temporal overlap of the pump radiation and seed radiation.

31. A method as defined in clause 28, comprising selectively spectrally filtering the seed radiation.

32. A method as defined in any of clauses 28 to 31, comprising selectively controlling power of each at least one pump radiation.

33. A method as defined in clause 32, wherein the selectively controlling power of each at least one pump radiation comprises selectively controlling power of each at least one pump radiation to flatten and/or provide a substantially flat spectral gain response of the output radiation.

34. A method as defined in clause 32 or 33, comprising controlling the power of each at least one pump radiation based on a desired output spectrum and/or an imposed relative delay between the seed radiation and each at least one pump radiation.

35. A method as defined in any of clauses 28 to 34, wherein said seed radiation comprises wavelengths which extend over a bandwidth greater than 200nm.

36. A method as defined in any of clauses 28 to 35, wherein the fluid comprised within each fluid filled hollow core fiber comprises a pressurized gas.

37. A method as defined in clause 36, wherein the gas comprises a noble gas.

38. A method as defined in any of clauses 28 to 37, comprising:

> supplying a fluid to a respective hollow core fiber of at least two optical parametric amplifiers; and delivering and coupling the seed radiation and a respective pump radiation into each said at least two optical parametric amplifiers; wherein each said optical parametric amplifier is configured to provide respective output radiation comprising different spectral components.

39. A method as defined in clause 38, wherein the optical parametric amplifiers differ from each other in terms of one or more of:

> one or more hollow core fiber dimensions; one or more properties of a respective pump radiation received at each optical parametric amplifier; one or more properties of a respective seed radiation received at each optical parametric amplifier; and/or one or more properties of a fluid supplied to each said optical parametric amplifier.

40. A method as defined in any of clauses 28 to 39, comprising generating, delivering and coupling into the at least one optical parametric amplifier at least two simultaneous pump radiations, each pump radiation comprising at least a different wavelength.

41. A method as defined in any of clauses 28 to 40, comprising generating the seed radiation and at least one pump radiation from a common laser source.

42. A method as defined in any of clauses 28 to 41, wherein the seed radiation comprise an energy less than 100pJ.

43. A method as defined in any of clauses 28 to 42, wherein a central wavelength of the output radiation is selectable over a range of wavelengths greater than 200nm.

44. A method as defined in any of clauses 28 to 42, wherein a central wavelength of the output radiation is selectable over a range of wavelengths greater than 400nm.

45. A method as defined in any of clauses 28 to 44, wherein a spectral bandwidth of the output radiation is greater than 5nm.

46. A method as defined in any of clauses 28 to 44, wherein a spectral bandwidth of the output radiation is greater than 10nm.

47. A method as defined in any of clauses 28 to 46, wherein the output radiation comprises signal radiation and idler radiation, each extending over a respective different wavelength range.

48. A radiation source being operable to perform the method of clause 47.

49. A metrology and/or inspection apparatus, comprising:

> a radiation source as defined in clause 27 or 48; wherein the metrology and/or inspection apparatus is operable to use at least one of the signal radiation and idler radiation for performing a measurement.

50. A metrology and/or inspection apparatus as defined in clause 59, wherein the metrology and/or inspection apparatus is operable to use both of the signal radiation and idler radiation for performing a measurement.

51. A metrology and/ or inspection apparatus as defined in clause 49 or 50, configured as any one of: a scatterometer, a digital holography microscope, a level detector or an alignment sensor.

52. A method of measuring a structure on a substrate; the method comprising:

> performing the method of any of clauses 28 to 47 to generate output radiation; and using the output radiation to measure the structure on a substrate.

53. A method as defined in clause 52, wherein the output radiation comprises signal radiation and idler radiation, each extending over a respective different wavelength range; and the method comprises using at least one of the signal radiation and output radiation for performing the measurement.

54. A method as defined in clause 52, wherein the output radiation comprises signal radiation and idler radiation, each extending over a respective different wavelength range; and

the method comprises using both of the signal radiation and output radiation for performing the measurement.

55. A method as defined in any of clauses 52 to 54, wherein said structure has been formed on the substrate using a lithographic process.

56. A lithographic apparatus comprising:

a radiation source as defined in clause 27 or 48; wherein the lithographic apparatus is operable to use at least one of the signal radiation and idler radiation as exposure radiation.

57. A lithographic apparatus as defined in clause 56, wherein the lithographic apparatus is operable to use both of the signal radiation and idler radiation as exposure radiation.

58. A lithographic apparatus as defined in clause 56 or 57; comprising:
an alignment sensor comprising the metrology and/or inspection apparatus of clause 49 or 50; and/or a level sensor comprising the metrology and/or inspection apparatus of clause 49 or 50.

59. A lithocell comprising:

the lithographic apparatus of clause 56 or 57; and
the metrology and/or inspection apparatus of any of clauses 49 to 51.

60. A lithocell as defined in clause 59, wherein the metrology and/or inspection apparatus is configured to measure substrates subsequent to their exposure on the lithographic apparatus.

61. A computer program comprising computer readable instructions operable to cause a radiation source to perform the method of any of clauses 28 to 47.

62. A computer program as defined in clause 61, wherein the radiation source comprises the radiation source of any of clauses 1 to 27.

63. A metrology or an inspection apparatus comprising the radiation source of any of the clauses 1 to 27.

64. A metrology or an inspection apparatus according to clause 63, wherein the metrology or inspection apparatus uses the signal and/or idler light as illumination light.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical metrology, it will be appreciated that the invention, where the context allows, is not limited to optical metrology and may be used in other applications, for example optical lithography (e.g., as the illumination source for exposing a pattern on a reticle onto a substrate).

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A radiation source comprising:

a seed radiation generator for generating at least one seed radiation, wherein the seed radiation is substantially broadband;
at least one optical parametric amplifier, each said at least one optical parametric amplifier comprising a hollow core fiber for confining a working fluid; and
a radiation delivery arrangement being operable to deliver and couple said seed radiation and at least one pump radiation into said at least one optical parametric amplifier so as to generate output radiation.

2. A radiation source as claimed in claim 1, wherein each said at least one optical parametric amplifier is configured to operate in a four-wave mixing optical parametric amplification process.

3. A radiation source as claimed in any claim 2, comprising a controller for at least controlling the radiation source such that it operates in the four-wave mixing optical parametric amplification process.

4. A radiation source as claimed in claim 1, 2 or 3, wherein said seed radiation generator is configured to chirp the seed radiation over a time period multiple times greater than a pulse duration of each at least one pump radiation such that a spectral composition of the output radiation is dependent on a temporal overlap of the pump radiation and seed radiation within each hollow core fiber.

5. A radiation source as claimed in claim 4, comprising a delay arrangement operable to selectively impose a relative delay between the seed radiation and each at least one pump radiation, which varies the temporal overlap of the pump radiation and seed radiation.

6. A radiation source as claimed in claim 5, wherein the delay arrangement comprises at least one delay line being operable to selectively delay the seed radiation and/or each at least one pump radiation.

7. A radiation source as claimed in claim 1, 2 or 3, comprising a spectral filter being operable to selectively spectrally filter the seed radiation.

8. A radiation source as claimed in any preceding claim, comprising at least one power control unit, wherein each at least one power control unit is operable to selectively control power of a respective pump radiation.

9. A radiation source as claimed in claim 8, wherein the power control unit is operable to flatten and/or provide a substantially flat spectral gain response of the output radiation.

10. A radiation source as claimed in claim 8 or 9, wherein each at least one power control unit is operable to control the power of its respective pump radiation based on a desired output spectrum and/or an imposed relative delay between the seed radiation and each at least one pump radiation.

11. A radiation source as claimed in any preceding claim, wherein said seed radiation generator comprises a fiber waveguide or filamentation medium.

12. A radiation source as claimed in any preceding claim, wherein the radiation delivery arrangement is operable to deliver and couple at least two simultaneous pump radiations, each pump radiation comprising at least a different wavelength.

13. A radiation source as claimed in claim 12, wherein the radiation delivery arrangement comprises at least one harmonic generator operable to operate on at least one portion of the laser radiation to provide the at least two pump radiations with respective different wavelengths.

14. A method of generating output radiation comprising:

generating substantially broadband seed radiation;
generating at least one pump radiation; and
coupling the seed radiation and the at least one pump radiation into a respective fluid filled hollow core fiber of at least one optical parametric amplifier so as to generate output radiation via a four-wave mixing optical parametric amplification process.

15. A metrology or an inspection apparatus comprising the radiation source of any of the clauses 1 to 13.

**Fig. 1**

**Fig. 2**

LA

SC1

SC3

CL

0
-1 +1

SC2

MT

**Fig. 3**

2

4

SM1

Z
X

PU

W

I

6

Z

8

λ

X

**Fig. 4**

**Fig. 5**

**Fig. 6**

OF

CAP    SP

WP

WP

CC    CC

CC    CC

*d*

HC

CC    CC

y

x

CAP

CAP

WP

**Fig. 7**

RDS

RSV

TW1    IE    WM    OF    OE    TW2

WM

PRS    IRD    WM    ORD

HC

**Fig. 8**

(a)    (b)

ST

21

**Fig. 9**

**Fig. 10**

**Fig. 11**

**(a)**

**(b)**

**Fig. 12**

**Fig. 13**

EP 4 664 194 A2

**Fig. 14**

EP 4 664 194 A2

**EP 4 664 194 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6952253 B
- US 20100328655 A
- US 2011102753 A1
- US 20120044470 A
- US 20110249244 A
- US 20110026032 A
- EP 1628164 A
- US 451599
- US 11708678 B
- US 12256780 B
- US 12486449 B
- US 12920968 B
- US 12922587 B
- US 13000229 B
- US 13033135 B
- US 13533110 B
- US 13891410 B
- WO 2011012624 A
- US 20160161863 A
- US 20160370717 A1
- US 7265364 B
- US 7646471 B
- US 2010233600 A1
- WO 2016102127 A1
- US 6961116 B
- US 2015261097 A1
- US 2004015085 A1
- WO 2017032454 A1
- WO 2018127266 A1
- US 9160137 B1